(19) Europäisches Patentamt
European Patent Office
Office européen des brevets

(11) EP 0 921 170 A1

# (12) DEMANDE DE BREVET EUROPEEN

(43) Date de publication:
**09.06.1999 Bulletin 1999/23**

(51) Int. Cl.[6]: **C09J 153/00**, C08F 293/00

(21) Numéro de dépôt: **98403011.4**

(22) Date de dépôt: **02.12.1998**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **03.12.1997 FR 9715204**

(71) Demandeur: **ELF ATOCHEM S.A.**
**92800 Puteaux, Hauts-de-Seine (FR)**

(72) Inventeur: **Senninger, Thierry**
**57700 Hayange (FR)**

(74) Mandataire: **Chaillot, Geneviève**
**Cabinet CHAILLOT,**
**16-20, avenue de L'Agent Sarre,**
**B.P. 74**
**92703 Colombes Cédex (FR)**

## (54) Utilisation de copolymères à blocs linéaires non-diéniques comme auto-adhésifs ou composants d'auto-adhésifs

(57) La présente invention porte sur l'utilisation comme auto-adhésif ou composant d'auto-adhésif d'un copolymère à blocs linéaire non-diénique de formule (I) ou d'un mélange de tels copolymères de formule (I) :

$$PB\text{-}PA\text{-}(PB')_x \qquad (I)$$

dans laquelle :

- PA représente un bloc polymère issu d'au moins un monomère A et ayant une température de transition vitreuse $Tg_A$ inférieure ou égale à 0°C ;
- PB et PB' représentent chacun indépendamment un bloc polymère issu d'au moins un monomère respectivement B ou B' et ayant une température de transition vitreuse respectivement $Tg_B$ ou $Tg_{B'}$ supérieure ou égale à 20°C, le (ou les) monomère(s) B et le (ou les) monomère(s) B' pouvant être identiques ou différents ; et
- x = 0, auquel cas le copolymère (I) est un copolymère di-blocs ou bien x = 1, auquel cas le copolymère (I) est un copolymère tri-blocs.

EP 0 921 170 A1

## Description

La présente invention concerne les auto-adhésifs.

Ceux-ci peuvent être définis comme des matières adhésives sensibles à la pression, possédant une adhésion élevée à la température ambiante, et ils trouvent application dans de nombreux domaines de la vie quotidienne (collage d'objets divers tels que par exemple les barres de seuil, les dalles, les crochets de salles de bains, etc.), dans le domaine médical (sparadraps, bandes collantes, patchs transdermiques), dans le domaine de l'emballage et de l'étiquetage (enveloppes auto-adhésives, notes adhésives repositionnables telles que celles vendues sous la marque "Post-it"), et dans le domaine de la construction automobile, etc.

On classera ici les auto-adhésifs en deux familles, suivant qu'ils sont mis en oeuvre en solution ou par voie "hot-melt". L'invention concerne en effet ces deux familles.

- Un auto-adhésif de la première famille consiste en un polymère ou copolymère ayant des propriétés adhésives, que l'on applique, à la température ambiante, en solution sur un support ; après évaporation du solvant, le support revêtu de la couche adhésive est protégé par une pellicule anti-adhésive ; au moment de l'application, cette pellicule est retirée et l'on vient appliquer le support par pression sur la partie réceptrice.
- Un auto-adhésif de la deuxième famille, qui est celle des adhésifs thermofusibles sensibles à la pression (HMPSA - hot melt pressure sensitive adhesives), consiste en une formulation d'un polymère ou copolymère de base avec au moins une résine tackifiante et/ou au moins un plastifiant. Ces composants sont malaxés à chaud et, compte tenu du fait que leur mise en oeuvre est généralement effectuée ultérieurement par le fabricant de supports adhésifs, ils sont après malaxage placés sous une forme solide, telle que granulés, grains, blocs cassés, plaquettes, barquettes siliconées dans le cas de produits à collant (tack) élevé, cordons, cartouches, bâtonnets, etc. Pour leur mise en oeuvre, on réchauffe la composition pour la fluidifier et on l'applique comme précédemment sur un support, mais à chaud (150-170°C). Les HMPSA évitent l'emploi de solvants qui peuvent être dangereux pour l'environnement et, pour cette raison, sont davantage recherchés.

Parmi les auto-adhésifs couramment utilisés, on trouve les copolymères séquencés comprenant une séquence polymère à base d'un monomère diénique, comme, par exemple, les copolymères styrène-butadiène-styrène (SBS) ou styrène-isoprène-styrène (SIS) ou styrène-butadiène (SB). Ces copolymères séquencés sont universellement utilisés pour la formulation de HMPSA. En raison de leur structure biphasique résultant de l'incompatibilité des séquences "dures" et "molles", ces copolymères offrent un excellent compromis entre les caractéristiques de la mise en oeuvre et les performances thermo-mécaniques lorsqu'ils sont judicieusement formulés avec diverses résines tackifiantes et/ou huiles. Ils présentent toutefois des inconvénients pour certaines applications :

- en tant qu'inconvénients liés à la présence d'une séquence diénique : stabilité thermique perfectible aux températures d'enduction utilisées (170-180°C) ; coloration ; et tenue au vieillissement ($O_2$ ; température, UV) médiocre ;
- température de fluage sous charge (appelée communément SAFT "Shear Adhesive Failure Temperature") limitée par la nature de la séquence dure utilisée (polystyrène) ; et
- biocompatibilité limitée en partie par suite de la nécessaire présence des résines et des huiles (applications médicales).

Les adhésifs sensibles à la pression acryliques offrent au contraire une bonne transparence, une bonne adhé ion sur certains substrats difficiles, une bonne stabilité thermique, une excellente tenue au vieillissement et une biocompatibilité satisfaisante (à condition de ne pas les formuler avec des huiles ou des résines tackifiantes). Cependant, il s'agit le plus souvent de copolymères statistiques proposés et utilisés sous forme de solutions ou d'émulsions aqueuses, ce qui les rend moins intéressants que les adhésifs thermofusibles des points de vue économique et environnemental. Par ailleurs, la tenue thermique au fluage est limitée par la structure monophasique des polymères : pas de réticulation physique due à la présence de séquences "dures", comme avec les copolymères séquencés.

Par ailleurs, par la demande de brevet européen EP-A-0 357 229, on connaît une composition adhésive sensible à la pression, thermofusible, acrylique, comprenant :

(a) environ 30-90% en poids d'un copolymère en peigne thermoplastique de

(i) 2-35% en poids sur la base du copolymère thermoplastique, d'un macromonomère de formule :

$$X\text{-}(Y)_p\text{-}Z$$

où :

- X est un groupe terminal réactif apte à la copolymérisation par voie radicalaire avec des comonomères acryliques pour fournir le copolymère en peigne ayant des chaînes latérales de macromonomère pendantes le long d'un squelette acrylique ;
- Y est un groupe de liaison ;
- p vaut 0 ou 1 ; et
- Z est une fraction polymère à base de polyméthacrylate ayant une température de transition vitreuse supérieure à 20°C et une masse moléculaire moyenne en poids d'environ 2000-35 000 et étant sensiblement non réactive dans les conditions de copolymérisation ; et

(ii) 65-98% en poids, sur la base du copolymère thermoplastique, d'au moins un comonomère choisi parmi les (méth)acrylates d'un alcool non tertiaire en $C_1$-$C_{18}$ ;

(b) environ 10-70% en poids d'un tackifiant ; et
(c) jusqu'à 20% en poids d'un plastifiant.

La fabrication du copolymère (a) ci-dessus nécessite la préparation préalable du macromonomère (i).
Le brevet européen EP-B-0 183 386 décrit, de façon semblable, un copolymère en peigne obtenu aussi à l'aide de macromonomères de polystyrène copolymérisés avec un acrylate.
Dans la déclaration d'invention américaine H1251, est décrite une composition adhésive thermofusible comprenant une résine tackifiante et un polymère d'une dioléfine conjuguée qui contient un monomère acrylique faisant partie du squelette polymère. Ce polymère se compose de préférence d'au moins une séquence à base de dioléfine conjuguée et d'au moins une séquence à base d'un monomère acrylique de structure :

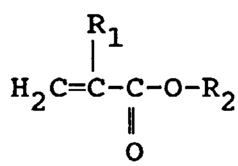

où :

- $R_1$ représente hydrogène, phényle, ou alkyle, linéaire ou ramifié, en $C_1$-$C_{10}$ ; et
- $R_2$ représente alkyle en $C_1$-$C_{14}$ non cyclique pouvant contenir une amine tertiaire ou une liaison éther.

Le brevet américain US-A-5 403 658 décrit une composition adhésive utilisée dans les adhésifs thermofusibles, cette composition comprenant :

(a) une résine tackifiante ;
(b) un copolymère séquencé styrène-isoprène ayant des blocs à base de styrène aux extrémités et ayant au moins un bloc interne à base d'au moins un monomère acrylique ; et
(c) un copolymère séquencé d'au moins un hydrocarbure vinylaromatique, au moins une dioléfine conjuguée et au moins un monomère acrylique (ayant la même structure que celle indiquée au paragraphe précédent) qui est sur l'extrémité du copolymère et est lié à un bloc de diène conjugué.

Dans ces copolymères selon H1251 et US-A-5 403 658, il reste des doubles liaisons résiduelles susceptibles d'être dégradées par la lumière ou l'oxygène.
Le brevet européen EP-A-0 686 653 décrit un copolymère séquencé en étoile comprenant :

- un segment mercaptan polyvalent ; et
- au moins deux segments polymères qui s'étendent radialement à partir du segment mercaptan polyvalent et ont au moins deux compositions différentes, ayant par exemple la formule :

$$[PA\text{-}S]_n\text{-}X\text{-}[S\text{-}PB]_m$$

où :
- PA et PB sont les segments de polymère ayant des compositions différentes ;

- $[-S]_n-X-[S-]_m$ est un reste de mercaptan tri- à hexavalent ;
- m + n = nombre allant de 3 au nombre de valence du reste de mercaptan ;
- n et m valent chacun au moins 0,1.

De tels copolymères sont utilisables comme adhésifs thermofusibles mais nécessitent de façon désavantageuse l'emploi d'un mercaptan polyvalent (problèmes d'odeur et de toxicité). De plus, à côté du copolymère recherché, il se forme aussi des homopolymères qui eux ne doivent apporter aucune propriété particulière.

La Société déposante a constaté avec surprise que les copolymères non-diéniques, composés de deux phases non miscibles sous forme de séquences dures et molles agencées en di- ou tri-blocs, tels que définis ci-après, présentaient des performances adhésives exceptionnelles, et permettaient donc de combiner dans un même produit les avantages de deux approches précédentes : HMPSA à séquences diéniques et adhésifs sensibles à la pression acrylique. La Société déposante a pu également mettre en évidence que ces copolymères di- ou tri-blocs et leurs mélanges peuvent être utilisés purs ou formulés en HMPSA, en particulier en fonction de la proportion des séquences dures et molles.

La présente invention a donc d'abord pour objet l'utilisation comme auto-adhésif ou composant d'auto-adhésif d'un copolymère à blocs linéaire non-diénique de formule (I) ou d'un mélange de tels copolymères de formule (I) :

$$PB\text{-}PA\text{-}(PB')_x \qquad (I)$$

dans laquelle :

- PA représente un bloc polymère issu d'au moins un monomère A et ayant une température de transition vitreuse $Tg_A$ inférieure ou égale à 0°C en particulier comprise entre -80°C et 0°C, bornes incluses ;
- PB et PB' représentent chacun indépendamment un bloc polymère issu d'au moins un monomère respectivement B ou B' et ayant une température de transition vitreuse respectivement $Tg_B$ ou $Tg_{B'}$ supérieure ou égale à 20°C, en particulier comprise entre 25°C et 175°C, bornes incluses, le (ou les) monomère(s) B et le (ou les) monomère(s) B' pouvant être identiques ou différents ; et
- x = 0, auquel cas le copolymère (I) est un copolymère di-blocs ou bien x = 1, auquel cas le copolymère (I) est un copolymère tri-blocs.

Le ou les monomères A capables de conduire à des blocs polymères ayant une température de transition vitreuse $Tg_A$ sont notamment choisis parmi les acrylates d'alkyle en $C_1$-$C_{18}$, les analogues méthacrylates pouvant être utilisés à des concentrations inférieures par rapport auxdits acrylates, et l'acide acrylique, l'acide méthacrylique, l'acrylamide, l'acrylate d'hydroxyéthyle et l'acrylate de glycidyle pouvant également être utilisés comme comonomères. A titre d'exemples de monomères A, on peut citer l'acrylate de méthyle, l'acrylate d'éthyle, l'acrylate de n-propyle, l'acrylate d'isopropyle, les acrylates de n-butyle, de tert.-butyle, d'iso-butyle, et de sec.-butyle, les acrylates d'amyle, les acrylates d'hexyle, l'acrylate de 2-éthylhexyle et les autres acrylates d'octyle, les acrylates de nonyle et les acrylates de décyle, l'acrylate de lauryle et l'acrylate de stéaryle.

On peut mentionner en particulier les acrylates de butyle et l'acrylate de 2-éthylhexyle, et plus particulièrement l'acrylate de n-butyle.

Le ou les monomères B et B' capables de conduire à des blocs polymères ayant une température de transition vitreuse respectivement $Tg_B$ et $Tg_{B'}$ sont notamment choisis parmi les monomères vinylaromatiques, le méthacrylate de méthyle, le méthacrylate de cyclohexyle, le méthacrylate d'éthyle, le méthacrylate d'isobornyle.

Comme monomères B et B', on peut citer plus particulièrement le styrène ou le méthacrylate de méthyle.

Lorsque les blocs sont des blocs de polymères statistiques, leurs températures de transition vitreuse peuvent être calculées à l'aide de la relation de Fox [T.G. Fox, Bull. Am. Physics Soc., Vol 1(3), page 123 (1956)].

Par ailleurs, dans le cas où les blocs PA, PB et le cas échéant PB' comportent des fonctions acide carboxylique, celles-ci peuvent avantageusement avoir été neutralisées à l'aide d'une base, telle que LiOH, NaOH, KOH, $Mg(OH)_2$, ZnO. Cette neutralisation, qui est facultative, peut avoir pour effet d'augmenter la tenue en température (SAFT).

Conformément à d'autres caractéristiques particulières des copolymères (I), chacun des blocs PA, PB et le cas échéant PB' a une longueur comprise entre 5 000 g/mole et 500 000 g/mole, en particulier entre 10 000 g/mole et 200 000 g/mole ; et la proportion des motifs du ou des monomères B et le cas échéant B' dans le copolymère (I) ou le mélange de copolymères (I) est comprise entre 10 et 60% en masse, en particulier entre 15 et 40% en masse.

Dans le cas où une telle proportion est comprise entre 10 et 25% en masse, le copolymère (I) ou mélange de copolymères (I) est avantageusement utilisé à l'état pur comme auto-adhésif mis en oeuvre en solution. Dans le cas où une telle proportion est comprise entre 20 et 60% en masse, en particulier entre 20 et 40% en masse, le copolymère (I) ou mélange de copolymères (I) est avantageusement utilisé comme résine de base dans la formulation d'un adhésif

thermofusible sensible à la pression (HMPSA).

Les copolymères à blocs de formule (I) sont avantageusement préparés par polymérisation radicalaire contrôlée, en masse ou en solution non aqueuse, par exemple par polymérisation par radical stable (SFRP - Stable Free Radical Polymerization) ou par polymérisation par transfert d'atomes (ATRP - Atom Transfer Radical Polymerization), la polymérisation par radical stable étant à ce jour préférée. On conduit la polymérisation du ou des monomères d'un premier bloc, puis celle du ou des monomères d'un second bloc en présence du premier bloc. Si l'amorceur de polymérisation utilisé à la première étape est bifonctionnel, on prépare alors des copolymères triblocs symétriques. Dans le cas où cet amorceur est monofonctionnel, pour obtenir le copolymère triblocs recherché, on conduit la polymérisation du ou des monomères du troisième bloc en présence du copolymère diblocs précédemment obtenu.

Par ailleurs, lors de la préparation de copolymères diblocs PB-PA, il est possible qu'il se forme par recombinaison de macroradicaux également un copolymère triséquencé de type PB-PA-PB :

$$2\ PB\text{-}PA^{\circ} \rightarrow PB\text{-}PA\text{-}PA\text{-}PB.$$

Le processus mis en jeu est la recombinaison de macroradicaux, processus connu pour avoir lieu notamment avec les acrylates en tant que blocs PA (cf. The Chemistry of Free Radical Polymerization G. Moad et D.H. Solomon, Pergamon, 1995, page 231). Les copolymères triblocs ainsi associés aux copolymères diblocs, qui forment directement des mélanges de copolymères (I) selon l'invention, sont susceptibles d'apporter des propriétés intéressantes au matériau.

Ce processus de recombinaison peut avoir lieu notamment lorsque le monomère A s'épuise dans le milieu, autrement dit lorsque la conversion du monomère A devient élevée, comprise par exemple entre 90 et 100%. A ce moment, la vitesse de polymérisation devient moins importante et le milieu devient plus visqueux, ce qui a pour effet de favoriser les réactions de terminaison. Un autre moyen de favoriser le couplage consiste à chauffer fortement le milieu réactionnel pour détruire le contre-radical présent à l'extrémité des chaînes en croissance. Des températures élevées dépassant 130°C peuvent suffire à détruire le contre-radical, par exemple le radical nitroxyde en polymérisation SFRP.

La polymérisation SFRP est une polymérisation radicalaire vivante à activation thermique en présence d'un amorceur de radicaux libres tel qu'un amorceur azoïque comme l'azobisisobutyronitrile ou un amorceur peroxydique comme le peroxyde de benzoyle, ainsi qu'en présence de radicaux libres stables, en particulier ceux comprenant le groupement =N-O$^{\bullet}$, tels que ceux des formules (IIa) et (IIb) :

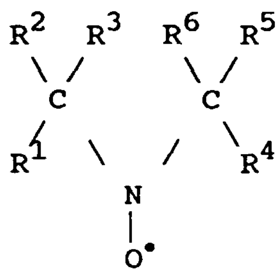

(IIa)

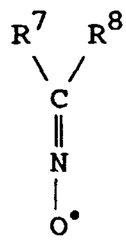

(IIb)

où :

- $R^1$, $R^2$, $R^3$, $R^4$, $R^5$, $R^6$, $R^7$ et $R^8$, identiques ou différents, représentent chacun :
  - un atome d'halogène, tel que le chlore, le brome ou l'iode ;
  - un groupement hydrocarboné linéaire, ramifié ou cyclique, saturé ou insaturé, tel qu'un radical alkyle ou phényle ;
  - un groupement ester -COOR$^9$ ou un groupement alcoxyle -OR$^{10}$ ou un groupement phosphonate -PO(OR$^{11}$)$_2$ où $R^9$, $R^{10}$ et les $R^{11}$ représentent chacun indépendamment un groupement hydrocarboné linéaire, ramifié ou cyclique, saturé ou insaturé ;
  - une chaîne de polymère pouvant être par exemple une chaîne de poly(méthacrylate de méthyle), de polybutadiène, de polyoxyéthylène, de polyoxypropylène, de polyoléfine comme de polyéthylène ou de polypropylène mais étant, de préférence, une chaîne de polystyrène,

$R^3$ et $R^6$ pouvant être reliés entre eux pour former un groupement

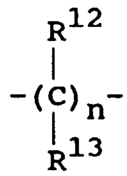 ; 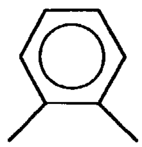 ;

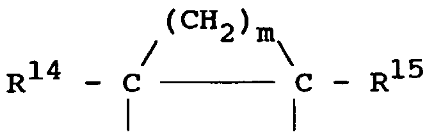 ; 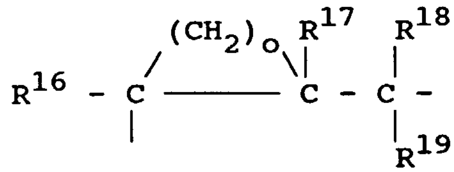

où $R^{12}$, $R^{13}$, $R^{14}$, $R^{15}$, $R^{16}$, $R^{17}$, $R^{18}$ et $R^{19}$ représentent chacun indépendamment un atome d'hydrogène, OH, -COOH, $-PO(OH)_2$, $-SO_3H$ ou ont une signification choisie parmi celles envisagées ci-dessus pour $R^1$ à $R^8$ ;

- n vaut 2 ou 3, les $R^{12}$ et les $R^{13}$ portés par les différents atomes de carbone pouvant être identiques ou différents ;
- m et o représentent chacun un entier de 1 à 10.

Le radical libre stable est choisi en particulier parmi :

- le 2,2,5,5-tétraméthyl-1-pyrrolidinyloxy (généralement commercialisé sous la marque PROXYL) ; le 3-carboxy-PROXYL ; le 3-carbamoyl-PROXYL ; le 2,2-diméthyl-4,5-cyclohexyl-PROXYL ; le 3-oxo-PROXYL ; le 3-hydroxylimine-PROXYL ; le 3-aminométhyl-PROXYL ; le 3-méthoxy-PROXYL ; le 3-t-butyl-PROXYL ; le 3-maléimidino-PROXYL ; le 3,4-di-t-butyl-PROXYL ; le 3-carboxylique-2,2,5,5-tétraméthyl-1-pyrridinyloxy ;
- le 2,2,6,6-tétraméthyl-1-pipéridinyloxy (généralement commercialisé sous la dénomination TEMPO) ; le 4-benzyloxyloxy-TEMPO ; le 4-méthoxy-TEMPO, le 4-carboxylique-4-amino-TEMPO ; le 4-chloro-TEMPO ; le 4-hydroxylimine-TEMPO ; le 4-hydroxy-TEMPO ; le 4-oxo-TEMPO ; le 4-oxo-TEMPO-éthylène cétal ; le 4-amino-TEMPO ; le 2,2,6,6-tétraéthyl-1-pipéridinyloxy ; le 2,2,6-triméthyl-6-éthyl-1-pipéridinyloxy ;
- le N-tertiobutyl-1-phényl-2-méthyl propyl nitroxyde ;
- le N-tertiobutyl-1-(2-naphtyl)-2-méthyl propyl nitroxyde ;
- le N-tertiobutyl-1-diéthylphosphono-2,2-diméthyl propyl nitroxyde ;
- le N-tertiobutyl-1-dibenzylphosphono-2,2-diméthyl propyl nitroxyde,
- le N-phényl-1-diéthylphosphono-2,2-diméthyl propyl nitroxyde ;
- le N-(1-phényl 2-méthyl propyl)-1-diéthylphosphono-1-méthyl éthyl nitroxyde ;
- le di-t-butyl nitroxyde ;
- le diphénylnitroxyde ;
- le t-butyl-t-amyl nitroxyde ;
- le 4, 4-diméthyl-1-oxazolidinyloxy (DOXYL) ; le 2-di-t-butyl-DOXYL ; le 5-décane-DOXYL ; le 2-cyclohexane-DOXYL.

La polymérisation contrôlée par transfert d'atomes (ATRP) est une polymérisation radicalaire vivante en présence d'un générateur de radicaux libres, monofonctionnel ou bifonctionnel, choisi notamment parmi (a) les dérivés de formule $CEZ_3$ (avec E = Cl, Br, I, F, H, $-CR^{20}R^{21}OH$, $R^{20}$ et $R^{21}$ représentant chacun indépendamment H ou alkyle en $C_1$-$C_{14}$ et Z = Cl ou Br) ; (b) les dérivés de formule $R^{22}CCl_3$ (avec $R^{22}$ représentant phényle ; benzyle ; benzoyle ; alcoxycarbonyle ; $R^{23}CO$ avec $R^{23}$ représentant alkyle en $C_1$-$C_{14}$ ou aryle ; alkyle ; mésityle ; trifluorométhyle; ou nitro) ; (c) les dérivés de formule

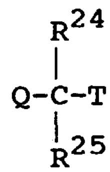

(avec Q représentant Cl ou Br ou un groupe acétate ou trifluoroacétate ou triflate ; $R^{24}$ représentant H, alkyle en $C_1$-$C_{14}$ ou un groupe aromatique ou $-CH_2OH$ ; T représentant $-COOR^{26}$, avec $R^{26}$ représentant H ou un groupe alkyle ou aromatique: CN : $-COR^{27}$, avec $R^{27}$ représentant alkyle en $C_1$-$C_{14}$, phényle ou isocyanate ; OH ; nitro ; amino substitué ou non ; alcoxy en $C_1$-$C_{14}$ ; $R^{28}CO$, avec $R^{28}$ représentant alkyle en $C_1$-$C_{14}$ ou aryle : $R^{25}$ représentant un groupe entrant dans les définitions de $R^{24}$ ou de Q ou un groupe fonctionnel tel qu'OH, nitro, amino substitué ou non, alcoxy en $C_1$-$C_{14}$, acyle, acide carboxylique, ester) ; (d) les composés lactones ou lactames halogénés en $\alpha$ ; (e) les N-halosuccinimides et les N-halophtalimides ; (f) les halogénures d'alkyl-sulfonyle et les halogénures d'arène sulfonyle ; (g) les composés de formule :

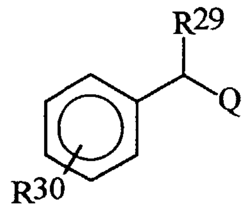

(avec $R^{29}$ représentant H, alkyle en $C_1$-$C_{14}$ ou acide carboxylique, ester, nitrile ou cétone ; $R^{30}$ représentant H ou alkyle en $C_1$-$C_{14}$, OH, acyle, amine substituée ou non, nitro, alcoxy en $C_1$-$C_{14}$ ou sulfonate; et Q a la signification donnée précédemment); (h) les composés de formule $R^{31}COW$ (avec $R^{31}$ = alkyle en $C_1$-$C_{14}$ ou aryle ; et W = halogène ou pseudohalogène) ; (i) les composés de formule

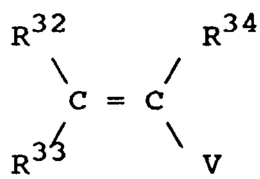

(avec $R^{32}$, $R^{33}$ et $R^{34}$ représentant chacun indépendamment alkyle en $C_1$-$C_{14}$ ou aryle ; et V représentant halogène, acétate, trifluoroacétate, triflate) ; (j) les halogénures aromatiques de formule Ar - U (avec Ar représentant un groupement aromatique, tel que $C_6H_5$- pouvant être substitué en position ortho, méta ou para par un groupement électroattracteur ou électrodonneur; et U représentant un halogène ) ; et les composés bifonctionnels constitués par deux groupements générateurs de radicaux monofonctionnels issus des classes (c) à (j) ci-dessus, reliés par une chaîne d'unités méthylène ou par un cycle benzénique ou par une combinaison des deux ; ladite réaction de polymérisation (ATRP) étant par ailleurs catalysée par des complexes de métaux de transition, tels que :

- les complexes de cuivre de type CuZ'/L, où :
    - Z' représente un atome d'halogène ou encore l'ion hexafluorophosphate $PF_6^-$ ou un groupement acétate ; et
    - L est un ligand $\alpha$-diimine, de squelette -N=C-C=N-, cette famille incluant la 2,2'-bipyridine et ses dérivés, la 1,10-phénanthroline et ses dérivés, les 1,4-diazo-1,3-butadiènes et les 2-pyridinecarbaldéhyde imines de structures :

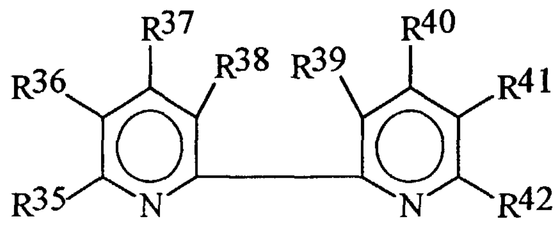

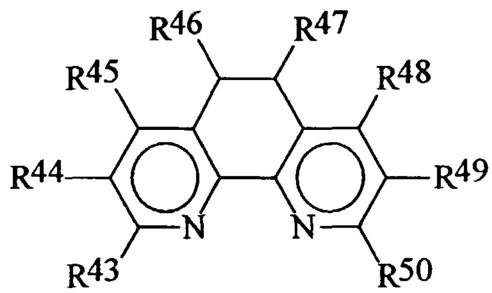

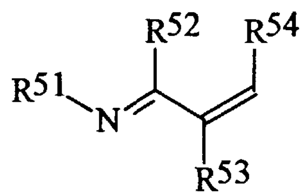

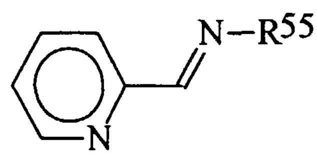

où $R^{35}$ à $R^{55}$ représentent chacun hydrogène, alkyle ou aryle ; et

- les catalyseurs complexes des métaux Ni, Pd ou Pt (tels que ceux décrits dans la demande européenne EP-A-0 824 111 du 20 juin 1997) ; Fe, Ru ou Os (tels que ceux décrits dans la demande européenne EP-A-0 826 698 du 20 juin 1997); Pd (tels que ceux décrits dans la demande européenne EP-A-0 824 110 du 18 mars 1997) ; Rh, Co ou Ir (tels que ceux décrits dans la demande européenne EP-A-0 841 346 du 20 juin 1997) ; et Cu, Ag ou Au (tels que ceux décrits dans la demande européenne EP-A-0 850 957 du 20 juin 1997).

Des familles plus particulières de générateurs de radicaux libres en ATRP seront trouvées dans les demandes de brevets européens mentionnées ci-dessus.

La présente invention porte également sur un auto-adhésif, caractérisé par le fait qu'il consiste en, ou qu'il comprend comme résine de base, un copolymère à blocs linéaire non-diénique tel que défini ci-dessus ou un mélange de tels copolymères.

En particulier, l'invention porte sur un autoadhésif mis en oeuvre en solution, la proportion des motifs du ou des monomères B et le cas échéant B' dans le copolymère (I) ou le mélange de copolymères (I) étant avantageusement comprise entre 10 et 25% en masse. L'invention englobe alors dans ce cas la formulation de l'auto-adhésif en question avec un solvant, qui est notamment le toluène, l'éthylbenzène et les solvants non-aromatiques. Lorsque le copolymère de l'invention est préparé en solution, celle-ci peut être directement la solution de mise en oeuvre comme adhésif.

Egalement, l'invention porte sur un auto-adhésif consistant en un adhésif thermofusible sensible à la pression comportant un copolymère (I) ou un mélange de copolymères (I) comme résine de base, la proportion des motifs du ou des monomères B et le cas échéant B' dans le copolymère (I) ou le mélange de copolymères (I) étant comprise

entre 20 et 60% en masse, en particulier entre 20 et 40% en masse.

L'adhésif thermofusible sensible à la pression peut également renfermer au moins une résine tackifiante, choisie en particulier parmi :

- les résines styréniques, comme les résines de poly α-méthyl styrène ;
- les résines de colophane ;
- les résines de colophane hydrogénées, dismutées, maléisées ;
- les résines d'esters de colophane, comme les esters à base de glycérine et les esters à base de pentaérythrite ;
- les résines de pétrole aliphatiques ;
- les résines de pétrole aliphatiques modifiées aromatiques ;
- les résines de pétrole aliphatiques hydrogénées ;
- les résines terpéniques, terpène-phénoliques, de coumarone, de coumarone-indène, aromatiques ;
- les résines terpéniques hydrogénées, et
- les résines de polystyrène tel que pinène et β pinène, le rapport pondéral résine(s) tackifiante(s)/ copolymère(s) (I) étant notamment de 0,3 à 3,5, en particulier de 0,3 à 3.

Egalement l'adhésif thermofusible selon l'invention peut renfermer en outre au moins un plastifiant, lequel peut être choisi parmi les huiles aromatiques paraffiniques ou naphténiques, le rapport pondéral huile(s)/copolymère(s) (I) pouvant aller jusqu'à 3, en particulier jusqu'à 2.

Enfin, la présente invention porte sur un support revêtu par un auto-adhésif selon l'invention, que celui-ci ait été appliqué en solution ou par voie "hot-melt".

Les Exemples suivants illustrent la présente invention sans toutefois en limiter la portée. Dans ces Exemples, les abréviations suivantes ont été utilisées :

- PS : bloc de polystyrène
- PAbu : bloc de poly(acrylate de n-butyle)
- DEPN : radical N-tertiobutyl-1-diéthylphosphono-2,2-diméthyl-propyl nitroxyle, représenté par la formule développée :

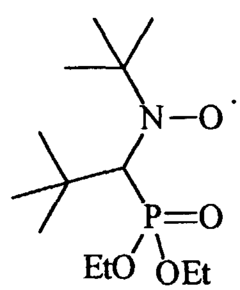

- AIBN : azobisisobutyronitrile
- $\overline{Mn}$ : masse moléculaire moyenne en nombre
- $\overline{Mw}$ : masse moléculaire moyenne en poids
- $\overline{Mw}/\overline{Mn}$ : indice de polymolécularité.

Dans les Exemples suivants, on fait référence à certaines caractéristiques visco-élastiques et/ou performances adhésives des copolymères (I) selon la présente invention. Ces caractéristiques sont mesurées de la façon suivante.

Caractéristiques visco-élastiques

Elles sont mesurées à l'aide d'un analyseur mécanique dynamique Rheometrics type RDA II à partir d'une plaque de polymère ou d'adhésif de 2 mm d'épaisseur environ. Les enregistrements obtenus permettent de connaître la variation, entre -120°C et +200°C par exemple, du module de conservation G', du module de perte G", de l'amortissement

$$(tg\delta = \frac{G''}{G'})$$

et de la viscosité complexe. La fréquence utilisée est sauf indication contraire, de 1 Hz. Les informations obtenues permettent à l'homme du métier de prédire le comportement adhésif des polymères testés et de guider son travail de formulation pour obtenir des autoadhésifs performants. Il est en particulier admis qu'un bon auto-adhésif, utilisable à température ordinaire, doit posséder un module de conservation compris entre 5 x $10^4$ et $10^5$ Pa et une température d'amortissement maximal située entre -10 et +10°C. Pour plus de détails, on se reportera à D.W. BAMBOROUGH et coll. "Prédiction des performances des adhésifs par l'analyse dynamique" Matériaux et Techniques, 87 (Mars-Avril 199.) ; et à A.J. FRANCK "Adhesives rheology" European Adhesives and Sealants 6 (Juin 1993).

La viscositê à l'état fondu des formulations selon la présente invention est aussi mesurée à l'aide d'un viscosimètre Brookfield type RVT muni d'un système de mesure de type cylindres coaxiaux et d'un bloc de chauffage de marque Thermosel. La viscosité d'un HMPSA devrait, de préférence, être inférieure à 50 000 mPa.s à 177°C pour une mise en oeuvre correcte.

Evaluation des performances adhésives

L'évaluation des auto-adhésifs selon la présente invention a été effectuée au départ de films de 25 µm d'épaisseur déposés sur un support polyester (Mylar) de 36 µm d'épaisseur. Ce film est obtenu par enduction d'une solution du HMPSA dans le toluène à l'aide d'une fente calibrée. Après séchage pendant 1 heure à la température ordinaire et 1/2 heure à 60°C, les films sont revêtus d'un papier paraffiné de protection et découpés en bandes de 25 mm de large avant utilisation. Toutes les évaluations mécaniques décrites ci-après sont réalisées à partir des rubans adhésifs ainsi obtenus. Le deuxième substrat utilisé est un acier inox 304 d'épaisseur 1 mm, soigneusement dégraissé avant collage (toluène + acétone). Les collages sont réalisés par simple pression à l'aide d'un rouleau normalisé (PSTC, 2 kg) passé deux fois dans chaque sens. Les opérations de collage et de tests sont effectués - sauf le SAFT- à une température de 23 ± 2°C.

Test de fluage à 23°C

Ce test est conduit dans les conditions générales de la norme PSTC7/procédure A avec une surface de collage de 25 x 12,5 mm et une charge de 1 kg. L'éprouvette inox est disposée à 2° de la verticale afin d'éviter tout effet de pelage. On note le temps au bout duquel le joint est rompu s'il est inférieur à 10 000 min. ou le glissement (en mm) du ruban adhésif à 10 000 min. si le joint n'est pas rompu. Le test est effectué sur un minimum de trois échantillons.

Test de fluage à 100°C

Il est conduit dans les mêmes conditions que le précédent mais avec un joint de 25 x 25 mm et une charge de 500 g. E'assemblage est disposé dans une étuve ventilée thermostatée à 100°C. On note le temps nécessaire à la rupture du joint. La durée d'attente maximale est de 3600 min. Au-delà, on mesure le glissement (en mm).

Test SAFT

Ce test n'est pas normalisé. L'éprouvette utilisée est la même que pour le test de fluage à 100°C. Les éprouvettes sont disposées dans une étuve à température ambiante et mises sous charge (500 g). La température de l'étuve est alors augmentée progressivement à une vitesse de 0,4°C/min. La température SAFT est la température de rupture de l'assemblage. Le test SAFT permet de classer les divers adhésifs testés en fonction de leur tenue en température.

Test de pelage à un angle de 180°

Ce test est effectué conformément à la norme FINAT n°1, mais avec des plaques d'inox 304 en lieu et place des plaques de verre. Le collage est effectué sur une longueur minimale de 175 mm. La force de pelage est mesurée soit 20 min, soit 24 h après le collage à une vitesse d'arrachement de 30 cm/min. Le pelage est exprimé en N par cm de largeur du ruban.

Tack à la bille

L'appareil et la procédure utilisés sont ceux de la norme PSTC-6. On mesure la longueur (en cm) de roulement

de la bille sur le ruban adhésif avant son arrêt.

Tack à la boucle

Ce test est effectué selon la norme FINAT n°9, mais le substrat utilisé est l'inox 304 au lieu du verre flotté. Le résultat obtenu est exprimé en N/25 mm (largeur de bande testée).

Les abréviations suivantes ont par ailleurs été utilisées :

RA = rupture adhésive : lors de l'essai, le film d'adhésif se détache complètement du support inox et reste donc intégralement sur le film de polyester ;

PC = rupture cohésive : l'adhésif reste collé à la fois sur la partie en inox et sur le film de polyester (Mylar).

EXEMPLE 1 : Préparation d'un copolymère à blocs PS(b)PAbu

(a) Préparation du premier bloc polystyrène PS

Dans un tube de Schlenk, on prépare un mélange comprenant :

- 300 g de styrène ;
- 0,984 g d'AIBN ; et
- 5,13 g de DEPN.

Le mélange est ensuite dégazé à l'aide d'une mise sous vide rapide ($10^{-2}$ mbar, 15 min.) pour éliminer l'oxygène résiduel. Puis le mélange est introduit dans un réacteur métallique de type Ingénieur Büro muni d'une agitation mécanique de type ancre et d'une régulation de température. Le mélange est porté à la température de 120°C. Au bout de 7 h de polymérisation, on laisse refroidir le mélange réactionnel jusqu'à environ 100°C, puis on introduit 1 litre de toluène dans le réacteur pour dissoudre le polymère. La solution obtenue est ensuite sortie du réacteur. On récupère le polymère en le précipitant dans un large volume d'acétone (10 litres), puis en le filtrant sur un filtre Büchner. Le polymère est ensuite séché sous vide à la température ambiante pendant plusieurs heures.

Le polymère est ensuite soumis à une chromatographie d'exclusion stérique (GPC) pour en déterminer les caractéristiques.

L'étalon retenu est le polystyrène.

- $\overline{Mn}$ = 17 100 g/mole
- $\overline{Mw}/\overline{Mn}$ = 1,3

(b) Préparation du copolymère PS(b)PAbu

Le polymère PS ainsi obtenu est mis à dissoudre dans 300 g d'acrylate de n-butyle dans un tube de Schlenk, puis le mélange est dégazé pour éliminer l'oxygène résiduel. Il est injecté dans le réacteur métallique et porté à la température de 120°C. Au bout de 6h 15 min., le mélange réactionnel est dilué par 1 litre de toluène, et la solution obtenue est sortie du réacteur. Le polymère à blocs est précipité dans un large volume d'acétone (10 litres), filtré sur Büchner et séché sous vide à la température ambiante.

Le copolymère est analysé à l'aide de la GPC et de la RMN $^1H$.

- $\overline{Mn}$ (en équivalent polystyrène) : 126 000 g/mole
- Composition : 15% styrène/85% acrylate de n-butyle

EXEMPLE 2

Le copolymère PS(b)PAbu (15/85), dont la synthèse a été décrite à l'Exemple 1, a été analysé à l'aide de l'analyseur Rheometrics type RDA II comme indiqué ci-dessus.

Le spectre obtenu fait l'objet de la Figure 1, d'où l'on peut déduire les caractéristiques visco-élastiques suivantes :

- Transition basse température (maximum de tg $\delta$) : -37,5°C [Cette transition - typique de la séquence PAbu - est due au caractère à blocs du polymère (structure biphasique)] ;
- Module de conservation G' à 20°C : 9 x $10^4$ MPa (cette valeur se situe dans la fourchette typique des auto-adhésifs

telle qu'indiquée plus haut) ;

- Début de fusion (tg δ = 1) : 150°C.

La viscosité à 177°C de ce copolymère est d'environ 550 000 mPa.s.
Le module et l'amortissement à la température ordinaire du copolymère pur sont assez proches des valeurs correspondant à un auto-adhésif. Ce copolymère pourra donc être utilisé comme auto-adhésif comme le confirment les résultats de l'évaluation mécanique, qui sont rapportés dans le Tableau 1 ci-après.
Les performances de l'adhésif sont en effet exceptionnelles comme le montrent les valeurs mesurées :

- SAFT très élevé proche de 120°C
- valeurs de tack à la boucle bonnes ;
- test de fluage excellent à la fois à 25°C et à 100°C.

<u>EXEMPLE 3</u> : <u>Préparation d'un copolymère statistique P(S(co)Abu)</u> :

On a préparé un polymère statistique de même composition que le copolymère de l'Exemple 1. On a procédé de la façon suivante :
Dans un tube de Schlenk, on prépare un mélange comprenant 8,0 g d'un polystyrène de masse moléculaire moyenne en nombre de 3 200 g/mole coiffé par un contreradical DEPN (obtenu par le même mode opératoire que pour l'Exemple 1), 50 g de styrène et 250 g d'acrylate de n-butyle.
Le mélange est ensuite dégazé à l'aide d'une mise sous vide rapide ($10^{-2}$ mbar, 15 minutes) pour éliminer l'oxygène résiduel. Puis le mélange est introduit dans le réacteur métallique Ingénieur Büro. Le mélange est porté à la température de 120°C. Au bout de 13 heures de polymérisation, on laisse refroidir le mélange réactionnel jusqu'à environ 100°C, puis 1 litre de toluène est introduit dans le réacteur pour dissoudre le polymère. La solution obtenue est ensuite sortie du réacteur. On récupère le polymère en le précipitant dans un large volume d'acétone (10 litres), puis en le filtrant sur un filtre Büchner. Le polymère est ensuite séché sous vide à la température ambiante pendant plusieurs heures.
Le polymère est ensuite caractérisé à l'aide de la chromatographie d'exclusion stérique (GPC) pour en déterminer les caractéristiques. L'étalon retenu est le polystyrène.

- $\overline{Mw}$ = 172 000 g/mole
- $\overline{Mw}/\overline{Mn}$ = 2,7
- Composition du copolymère déterminée par $^1H$ RMN : 17% styrène/83% acrylate de n-butyle.

La structure de ce copolymère se distingue de celle du copolymere de l'Exemple 1 par le fait que l'enchaînement des monomères est différent. La structure n'est plus celle d'un bloc, mais celle d'un copolymère statistique. Les compositions globales de monomères sont cependant très proches.
Ce polymère statistique présente les caractéristiques visco-élastiques suivantes (déduites du spectre qui fait l'objet de la Figure 2, obtenu comme indiqué à l'Exemple 2 pour le copolymère à blocs de la présente invention) :

- Transition basse température (maximum de Tgδ) = -16°C
- Module de conservation à 20°C : 7 x $10^4$ Pa
- Début de fusion (tgδ = 1) = 62°C

La viscosité à 177°C est de 25 000 mPa.s.
Les performances adhésives de ce copolymère statistique, évaluées dans les mêmes conditions qu'à l'Exemple 2, sont également rapportées dans le Tableau 1 ci-après.
On notera que les valeurs de SAFT et de fluage sont moins bonnes pour le copolymère statistique que pour le copolymère de l'Exemple 1.

Tableau 1

| Copolymère de l'Exemple | 2(copolymère PS(b)PAbu de l'invention) | 3(copolymère statistique P(S(Co)Abu comparatif) |
|---|---|---|
| Fluage (min)/1 mn à 25°C | > 10 000 | 22 |
| à 100°C | 205 | 6 |
| SAFT (°C) | 117 | 62 |
| Pelage 180° (N/cm) Jour J0 | 2,28$_{RA}$ | 4,1$_{RA}$ |
| J + 1 | 3,9$_{RA}$ | 6$_{RA}$ |
| Tack boucle (N) | 10,5$_{RA}$ | 7,4$_{RA}$ |
| Tack bille (cm) | 27,5 | >30 |

Exemple 4 : Préparation d'un copolymère à blocs PS(b)PAbu enrichi en styrène

On reprend le mode opératoire de l'Exemple 1 mais on augmente la proportion de styrène dans le copolymère à blocs.
Composition du copolymère déterminée par $^1$H RMN : 28% styrène/72% acrylate de n-butyle.

Analyse GPC :

- $\overline{Mw}$ (en équivalent polystyrène) = 142 000 g/mole
- $\overline{Mw}/\overline{Mn}$ = 1,8

Exemple 5 : Test du copolymère de l'Exemple 4 dans une formulation HMPSA

On prépare la formulation suivante :

| | |
|---|---|
| • Copolymère de l'Exemple 4 dissous à 10% dans le toluène | 200 g |
| • Tackifiant commercialisé sous la dénomination "FORAL 105E" | 50 g |
| • Huile commercialisée sous la dénomination "CATENEX 945" | 30 g |

On réalise les tests selon les modes opératoires définis précédemment :

| | |
|---|---|
| - Pelage 180° (N/cm), jour J0 | 7,4 |
| - Tack à la boucle (N) | $20,2_{RC}$ |

Exemple 6 : Test du copolymère de l'Exemple 4 dans une formulation HMPSA

| | |
|---|---|
| • Copolymère de l'Exemple 4 dissous à 10% dans le toluène | 300 g |
| • Tackifiant commercialisé sous la dénomination "FORAL 105E" | 50 g |
| • Huile commercialisée sous la dénomination "CATENEX 945" | 20 g |

On réalise les tests selon les modes opératoires définis précédemment :

| | |
|---|---|
| - Pelage 180° (N/cm), jour J0 | 14,6 |
| - Tack à la boucle (N) | $3,6_{RC}$ |

**Revendications**

1. Utilisation comme auto-adhésif ou composant d'auto-adhésif d'un copolymère à blocs linéaire non-diénique de formule (I) ou d'un mélange de tels copolymères de formule (I) :

$$PB\text{-}PA\text{-}(PB')_x \quad (I)$$

dans laquelle :

- PA représente un bloc polymère issu d'au moins un monomère A et ayant une température de transition vitreuse $Tg_A$ inférieure ou égale à 0°C ;
- PB et PB' représentent chacun indépendamment un bloc polymère issu d'au moins un monomère respectivement B ou B' et ayant une température de transition vitreuse respectivement $Tg_B$ ou $Tg_{B'}$ supérieure ou égale à 20°C, le (ou les) monomère(s) B et le (ou les) monomère(s) B' pouvant être identiques ou différents ; et
- x = 0, auquel cas le copolymère (I) est un copolymère di-blocs ou bien x = 1, auquel cas le copolymère (I) est un copolymère tri-blocs.

**2.** Utilisation selon la revendication 1, caractérisée par le fait que la température de transition vitreuse $Tg_A$ est comprise entre -80°C et 0°C, bornes incluses.

**3.** Utilisation selon l'une des revendications 1 et 2, caractérisée par le fait que la température de transition vitreuse $Tg_B$ ou $Tg_{B'}$ est comprise entre 25°C et 175°C, bornes incluses.

**4.** Utilisation selon l'une des revendications 1 à 3, caractérisée par le fait que le ou les monomères A capables de conduire à des blocs polymères ayant une température de transition vitreuse $Tg_A$ sont choisis parmi les acrylates d'alkyle en $C_1$-$C_{18}$, les analogues méthacrylates pouvant être utilisés à des concentrations inférieures par rapport auxdits acrylates, et l'acide acrylique, l'acide méthacrylique, l'acrylamide, l'acrylate d'hydroxyéthyle et l'acrylate de glycidyle pouvant également être utilisés comme comonomères.

**5.** Utilisation selon la revendication 4, caractérisée par le fait que le ou les monomères A sont choisis parmi l'acrylate de méthyle, l'acrylate d'éthyle, l'acrylate de n-propyle, l'acrylate d'isopropyle, les acrylates de n-butyle, de tert.-butyle, d'iso-butyle, et de sec.-butyle, les acrylates d'amyle, les acrylates d'hexyle, l'acrylate de 2-éthylhexyle et les autres acrylates d'octyle, les acrylates de nonyle et les acrylates de décyle, l'acrylate de lauryle et l'acrylate de stéaryle.

**6.** Utilisation selon la revendication 5, caractérisée par le fait que les monomères A sont choisis parmi les acrylates de butyle et l'acrylate de 2-éthylhexyle.

**7.** Utilisation selon la revendication 6, caractérisée par le fait que le monomère A est l'acrylate de n-butyle.

**8.** Utilisation selon l'une des revendications 1 à 7, caractérisée par le fait que le ou les monomères B capables de conduire à des blocs polymères ayant une température de transition vitreuse respectivement $Tg_B$ ou $Tg_{B'}$ sont choisis indépendamment parmi les monomères vinylaromatiques, le méthacrylate de méthyle, le méthacrylate de cyclohexyle, le méthacrylate d'éthyle et le méthacrylate d'isobornyle.

**9.** Utilisation selon la revendication 8, caractérisée par le fait que les monomères B et B' sont choisis indépendamment parmi le styrène et le méthacrylate de méthyle.

**10.** Utilisation selon l'une des revendications 1 à 9, caractérisé par le fait que les blocs PA, PB et le cas échéant PB' comportent des fonctions acide carboxylique qui ont été neutralisées à l'aide d'une base, telle que LiOH, NaOH, KOH, $Mg(OH)_2$, ZnO.

**11.** Utilisation selon l'une des revendications 1 à 10, caractérisée par le fait que chacun des blocs du copolymère (I) a une longueur comprise entre 5 000 g/mole et 500 000 g/mole.

**12.** Utilisation selon la revendication 11, caractérisée par le fait que chacun des blocs du copolymère (I) a une longueur comprise entre 10 000 g/mole et 200 000 g/mole.

**13.** Utilisation selon l'une des revendications 1 à 12, caractérisée par le fait que la proportion des motifs du ou des monomères B et le cas échéant B' dans le copolymère (I) ou le mélange de copolymères (I) est comprise entre 10 et 60% en masse.

**14.** Utilisation selon la revendication 13, caractérisée par le fait que la proportion des motifs du ou des monomères B

et le cas échéant B' dans le copolymère (I) ou le mélange de copolymères (I) est comprise entre 15 et 40% en masse.

**15.** Utilisation selon la revendication 13, caractérisée par le fait que la proportion des motifs du ou des monomères B et le cas échéant B' dans le copolymère (I) ou le mélange de copolymères (I) est de 10 à 25% en masse, ledit copolymère (I) ou mélange de copolymères (I) étant utilisé à l'état pur comme auto-adhésif mis en oeuvre en solution.

**16.** Utilisation selon la revendication 13, caractérisée par le fait que la proportion des motifs du ou des monomères B et le cas échéant B' dans le copolymère (I) ou le mélange de copolymères (I) est de 20 à 60% en masse, ledit copolymère (I) ou mélange de copolymères (I) étant utilisé comme résine de base dans la formulation d'un adhésif thermofusible sensible à la pression (HMPSA).

**17.** Auto-adhésif caractérisé par le fait qu'il consiste en, ou qu'il comprend comme résine de base, un copolymère à blocs linéaire non-diénique de formule (I) ou un mélange de tels copolymères de formule (I) :

$$PB\text{-}PA\text{-}(PB')_x \quad (I)$$

dans laquelle :

- PA représente un bloc polymère issu d'au moins un monomère A et ayant une température de transition vitreuse $Tg_A$ inférieure ou égale à 0°C ;
- PB et PB' représentent chacun indépendamment un bloc polymère issu d'au moins un monomère respectivement B ou B' et ayant une température de transition vitreuse respectivement $Tg_B$ ou $Tg_{B'}$ supérieure ou égale à 20°C, le (ou les) monomère(s) B et le (ou les) monomère(s) B' pouvant être identiques ou différents ; et
- x = 0, auquel cas le copolymère (I) est un copolymère di-blocs ou bien x = 1, auquel cas le copolymère (I) est un copolymère tri-blocs.

**18.** Auto-adhésif selon la revendication 17, caractérisé par le fait que la température de transition vitreuse $Tg_A$ est comprise entre -80°C et 0°C, bornes incluses.

**19.** Auto-adhésif selon l'une des revendications 17 et 18, caractérisé par le fait que la température de transition vitreuse $Tg_B$ ou $Tg_{B'}$ est comprise entre 25°C et 175°C, bornes incluses.

**20.** Auto-adhésif selon l'une des revendications 17 à 19, caractérisé par le fait que le ou les monomères A capables de conduire à des blocs polymères ayant une température de transition vitreuse $Tg_A$ sont choisis parmi les acrylates d'alkyle en $C_1$-$C_{18}$, les analogues méthacrylates pouvant être utilisés à des concentrations inférieures par rapport auxdits acrylates, l'acide acrylique, l'acide méthacrylique, l'acrylamide, l'acrylate d'hydroxyéthyle et l'acrylate de glycidyle pouvant également être utilisés comme comonomères.

**21.** Auto-adhésif selon la revendication 20, caractérisé par le fait que le ou les monomères A sont choisis parmi l'acrylate de méthyle, l'acrylate d'éthyle, l'acrylate de n-propyle, l'acrylate d'isopropyle, les acrylates de n-butyle, de tert.-butyle, d'iso-butyle et de sec.-butyle, les acrylates d'amyle, les acrylates d'hexyle, l'acrylate de 2-éthylhexyle et les autres acrylates d'octyle, les acrylates de nonyle et les acrylates de décyle, l'acrylate de lauryle et l'acrylate de stéaryle.

**22.** Auto-adhésif selon la revendication 21, caractérisé par le fait que les monomères A sont choisis parmi les acrylates de butyle et l'acrylate de 2-éthylhexyle.

**23.** Auto-adhésif selon la revendication 22, caractérisé par le fait que le monomère A est l'acrylate de n-butyle.

**24.** Auto-adhésif selon l'une des revendications 17 à 23, caractérisé par le fait que le ou les monomères B et B' capables de conduire à des séquences blocs ayant une température de transition vitreuse respectivement $Tg_B$ ou $Tg_{B'}$ sont choisis indépendamment parmi les monomères vinylaromatiques, le méthacrylate de méthyle, le méthacrylate de cyclohexyle, le méthacrylate d'éthyle et le méthacrylate d'isobornyle.

**25.** Auto-adhésif selon la revendication 24, caractérisé par le fait que les monomères B et B' sont choisis indépendamment parmi le styrène ou le méthacrylate de méthyle.

**26.** Auto-adhésif selon l'une des revendications 17 à 25, caractérisé par le fait que les blocs PA, PB et le cas échéant PB' comportent des fonctions acide qui ont été neutralisées à l'aide d'une base telle que LiOH, NaOH, KOH, $Mg(OH)_2$, ZnO.

**27.** Auto-adhésif selon l'une des revendications 17 à 26, caractérisé par le fait que chacun des blocs du copolymère (I) a une longueur comprise entre 5 000 g/mole et 500 000 g/mole.

**28.** Auto-adhésif selon la revendication 27, caractérisé par le fait que chacun des blocs du copolymère (I) a une longueur comprise entre 10 000 g/mole et 200 000 g/mole.

**29.** Auto-adhésif selon l'une des revendications 17 à 28, caractérisé par le fait que la proportion des motifs du ou des monomères B et le cas échéant B' dans le copolymère (I) ou le mélange de copolymères (I) est comprise entre 10 et 60% en masse, en particulier entre 15 et 40% en masse.

**30.** Auto-adhésif susceptible d'être mis en oeuvre en solution selon l'une des revendications 17 à 28, caractérisé par le fait que la proportion des motifs du ou des monomères B et le cas échéant B' dans le copolymère (I) ou le mélange de copolymères (I) est comprise entre 10 et 25% en masse.

**31.** Formulation de l'auto-adhésif tel que défini à la revendication 30 avec un solvant choisi notamment parmi le toluène, l'éthylbenzène et les solvants non-aromatiques.

**32.** Auto-adhésif consistant en un adhésif thermofusible sensible à la pression selon l'une des revendications 17 à 28, caractérisé par le fait que la proportion des motifs du ou des monomères B et le cas échéant B' dans le copolymère (I) ou le mélange de copolymères (I) est comprise entre 20 et 60% en masse, en particulier entre 20 et 40% en masse.

**33.** Auto-adhésif consistant en un adhésif thermofusible sensible à la pression, selon l'une des revendications 17 à 29 et 32, caractérisé par le fait qu'il renferme en outre au moins une résine tackifiante.

**34.** Auto-adhésif selon la revendication 33, caractérisé par le fait que la ou les résines tackifiantes sont choisies parmi :

- les résines styréniques, comme les résines de poly α-méthyl styrène ;
- les résines de colophane ;
- les résines de colophane hydrogénées, dismutées, maléisées ;
- les résines d'esters de colophane, comme les esters à base de glycérine et les esters à base de pentaérythrite ;
- les résines de pétrole aliphatiques ;
- les résines de pétrole aliphatiques modifiées aromatiques ;
- les résines de pétrole aliphatiques hydrogénées ;
- les résines terpéniques, terpène-phénoliques, de coumarone, de coumarone-indène, aromatiques ;
- les résines terpéniques hydrogénées, et
- les résines de polystyrène tel que pinène et β pinène.

**35.** Auto-adhésif selon l'une des revendications 33 et 34, caractérisé par le fait que le rapport pondéral résine(s) tackifiante(s)/ copolymère(s) (I) est de 0,30 à 3,5.

**36.** Auto-adhésif selon la revendication 35, caractérisé par le fait que le rapport pondéral résine(s) tackifiante(s)/copolymère(s) (I) est de 0,3 à 3.

**37.** Auto-adhésif consistant en un adhésif thermofusible sensible à la pression, selon l'une des revendications 17 à 29 et 32 à 36, caractérisé par le fait qu'il renferme en outre au moins un plastifiant.

**38.** Auto-adhésif selon la revendication 37, caractérisé par le fait que le ou les plastifiants sont choisis parmi les huiles aromatiques paraffiniques ou naphténiques, le rapport pondéral huile(s)/copolymère(s) (I) pouvant aller jusqu'à 3.

**39.** Auto-adhésif selon la revendication 38, caractérisé par le fait que le rapport pondéral huile(s)/copolymère(s) (I) va jusqu'à 2.

**40.** Support revêtu par une couche de l'auto-adhésif tel que défini à l'une des revendications 17 à 30 et 32 à 39.

Fig. 1

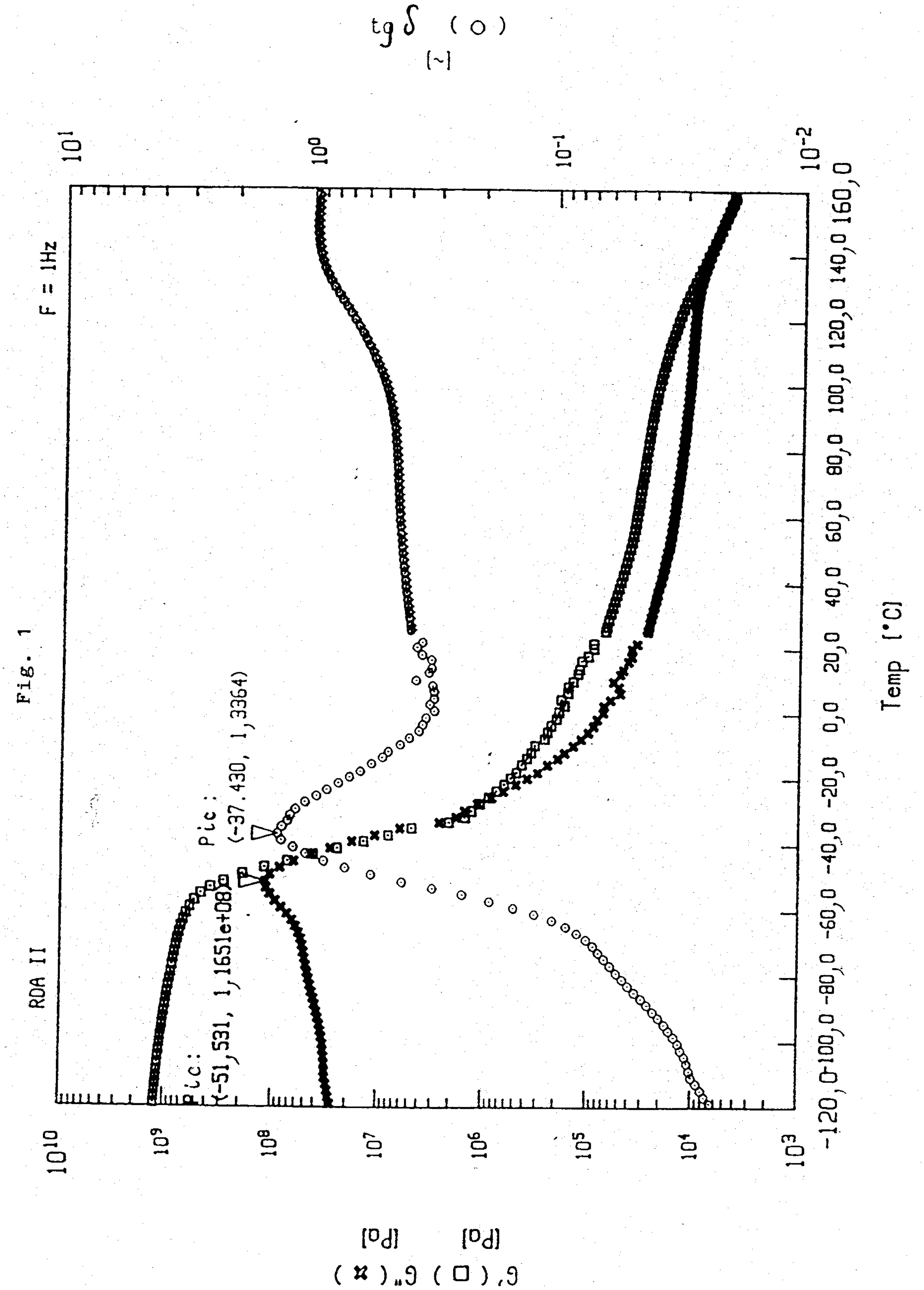
RDA II
F = 1Hz
tg δ ( ○ )
[~]
10^1
10^0
10^-1
10^-2
Pic :
(-37.430, 1,3364)
Pic :
(-51,531, 1,1651e+08)
10^10
10^9
10^8
10^7
10^6
10^5
10^4
10^3
G' ( □ ) G" ( ✖ )
[Pa] [Pa]
-120,0 -100,0 -80,0 -60,0 -40,0 -20,0 0,0 20,0 40,0 60,0 80,0 100,0 120,0 140,0 160,0
Temp [°C]

Fig. 2

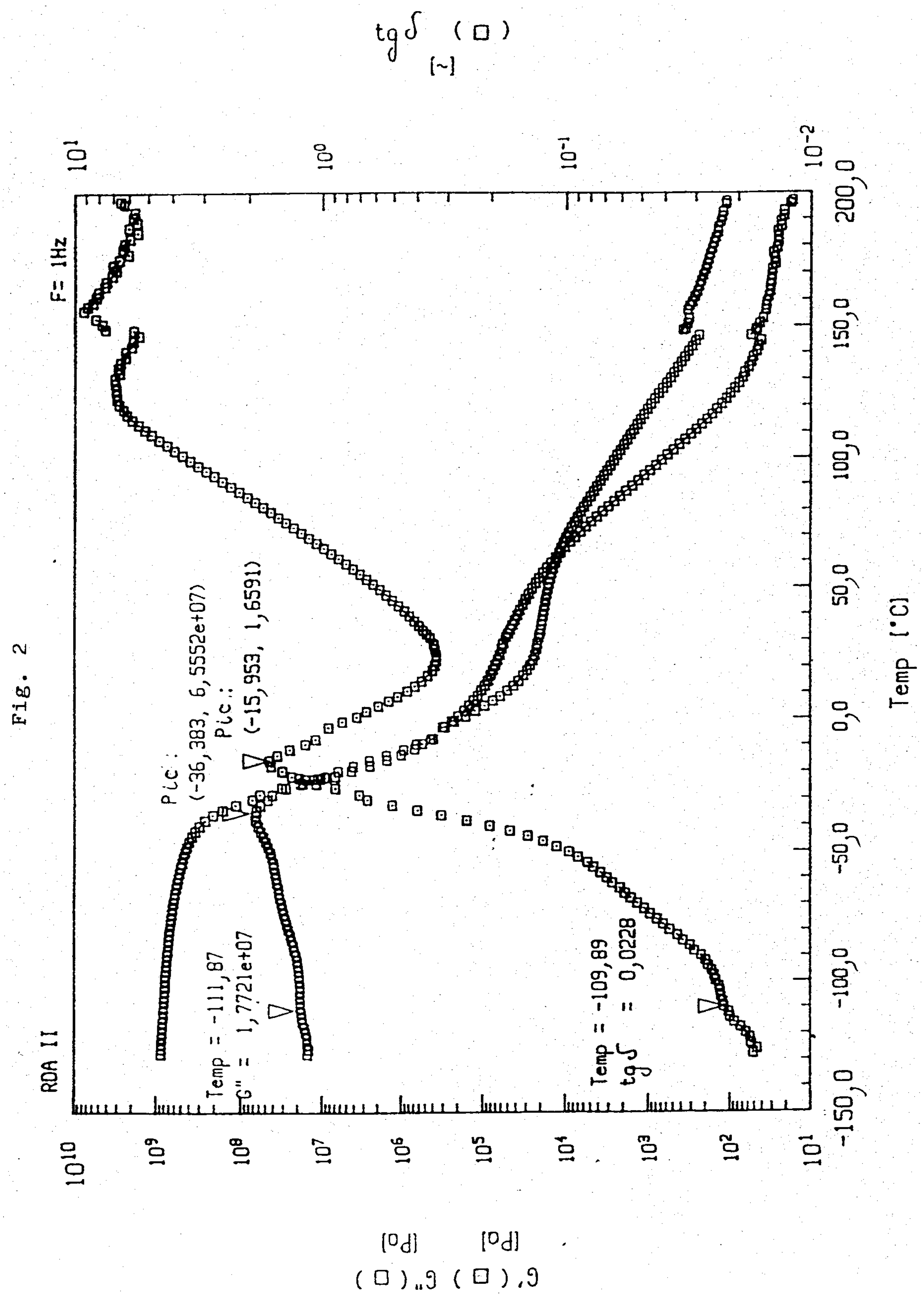
RDA II
F= 1Hz
tg δ [~] (□)
G' (□) [Pa]
G" (□) [Pa]
Temp [°C]
Pic :
(-36,383, 6,5552e+07)
Pic :
(-15,953, 1,6591)
Temp = -111,87
G" = 1,7721e+07
Temp = -109,89
tg δ = 0,0228

Office européen des brevets

# RAPPORT DE RECHERCHE EUROPEENNE

Numéro de la demande
EP 98 40 3011

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X<br><br><br><br>Y | PATENT ABSTRACTS OF JAPAN<br>vol. 013, no. 205 (C-595), 15 mai 1989<br>& JP 01 024879 A (MITSUBISHI PETROCHEM CO LTD), 26 janvier 1989<br>* abrégé * | 1-9, 17-25<br><br><br>10-16, 26-40 | C09J153/00<br>C08F293/00 |
| X | EP 0 349 270 A (MINNESOTA MINING & MFG)<br>3 janvier 1990<br>* page 3, ligne 38 - page 4, ligne 5 ; page 2, ligne 3-4 ; page 5, ligne 55 - page 6, ligne 13 *<br>* page 8, ligne 11-32; revendications 1-10 * | 1-9, 13-25, 29-40 | |
| X | EP 0 286 376 A (MITSUBISHI PETROCHEMICAL CO) 12 octobre 1988<br>* page 8, ligne 5-40 ; page 2, ligne 12 ; page 4, ligne 4 - page 5, ligne 48 *<br>* page 7, ligne 50-56; revendications 1-18 * | 1-9,11, 12,17-25 | **DOMAINES TECHNIQUES RECHERCHES (Int.Cl.6)**<br>C09J<br>C08F |
| X | EP 0 349 232 A (MINNESOTA MINING & MFG)<br>3 janvier 1990<br>* page 3, ligne 17-40 ; page 2, ligne 13*<br>* page 6, ligne 35-51; revendications 1-9 * | 1-10, 13-25, 29-40 | |
| X | WO 93 20164 A (MINNESOTA MINING & MFG)<br>14 octobre 1993<br>* page 4, ligne 20 - page 7, ligne 28 *<br>* page 15, ligne 14-19; revendications 1-10 * | 1-9, 11-25, 27-40 | |
| | -/-- | | |

Le présent rapport a été établi pour toutes les revendications

| Lieu de la recherche | Date d'achèvement de la recherche | Examinateur |
|---|---|---|
| LA HAYE | 15 mars 1999 | Hammond, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Office européen des brevets

# RAPPORT DE RECHERCHE EUROPEENNE

Numéro de la demande
EP 98 40 3011

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,Y | US 5 403 658 A (SOUTHWICK JEFFREY G ET AL) 4 avril 1995<br>* colonne 6, ligne 24-55 ; colonne 3, ligne 52-63 ; colonne 8, ligne 10-12 *<br>* colonne 2, ligne 41-60 * | 31,33-40 | |
| Y | EP 0 408 429 A (ATOCHEM ELF SA) 16 janvier 1991<br>* page 3, ligne 9-15 *<br>* abrégé; revendications 1-10 * | 11-16, 27-30,32 | |
| Y | US 5 166 274 A (MCGRATH JAMES E ET AL) 24 novembre 1992<br>* colonne 5, ligne 40-48 ; colonne 3, ligne 28-31 *<br>* abrégé * | 10,26 | |

DOMAINES TECHNIQUES RECHERCHES (Int.Cl.6)

Le présent rapport a été établi pour toutes les revendications

| Lieu de la recherche | Date d'achèvement de la recherche | Examinateur |
|---|---|---|
| LA HAYE | 15 mars 1999 | Hammond, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE RELATIF A LA DEMANDE DE BREVET EUROPEEN NO.** EP 98 40 3011

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

15-03-1999

| Document brevet cité au rapport de recherche | Date de publication | Membre(s) de la famille de brevet(s) | Date de publication |
|---|---|---|---|
| EP 0349270 A | 03-01-1990 | AU 614140 B | 22-08-1991 |
| | | AU 3523989 A | 04-01-1990 |
| | | DE 68917657 D | 29-09-1994 |
| | | DE 68917657 T | 23-03-1995 |
| | | ES 2057127 T | 16-10-1994 |
| | | JP 2103277 A | 16-04-1990 |
| | | MX 169747 B | 22-07-1993 |
| EP 0286376 A | 12-10-1988 | JP 1026619 A | 27-01-1989 |
| | | JP 2553134 B | 13-11-1996 |
| | | DE 3878959 T | 14-10-1993 |
| | | US 5314962 A | 24-05-1996 |
| EP 0349232 A | 03-01-1990 | AT 89572 T | 15-06-1993 |
| | | AU 616770 B | 07-11-1991 |
| | | AU 3706389 A | 04-01-1990 |
| | | DE 68906602 T | 04-11-1993 |
| | | ES 2055063 T | 16-08-1994 |
| | | JP 2045511 A | 15-02-1990 |
| | | MX 173261 B | 14-02-1994 |
| WO 9320164 A | 14-10-1993 | EP 0633918 A | 18-01-1995 |
| | | JP 7505431 T | 15-06-1995 |
| US 5403658 A | 04-04-1995 | AUCUN | |
| EP 0408429 A | 16-01-1991 | FR 2649401 A | 11-01-1991 |
| | | FR 2655049 A | 31-05-1991 |
| | | AT 147080 T | 15-01-1997 |
| | | CA 2063415 A | 11-01-1991 |
| | | DD 296498 A | 05-12-1991 |
| | | DE 69029541 D | 13-02-1997 |
| | | DE 69029541 T | 10-07-1997 |
| | | ES 2095869 T | 01-03-1997 |
| | | WO 9100874 A | 24-01-1991 |
| | | JP 7025859 B | 22-03-1995 |
| | | US 5264527 A | 23-11-1993 |
| | | AT 141931 T | 15-09-1996 |
| | | CA 2030683 A,C | 28-05-1991 |
| | | DE 69028282 D | 02-10-1996 |
| | | DE 69028282 T | 06-03-1997 |
| | | EP 0430785 A | 05-06-1991 |
| | | ES 2091233 T | 01-11-1996 |
| | | FI 905818 A | 28-05-1991 |
| | | JP 1939646 C | 09-06-1995 |
| | | JP 3195711 A | 27-08-1991 |

EPO FORM P0460

Pour tout renseignement concernant cette annexe : voir Journal Officiel de l'Office européen des brevets, No.12/82

## ANNEXE AU RAPPORT DE RECHERCHE EUROPEENNE RELATIF A LA DEMANDE DE BREVET EUROPEEN NO.

EP 98 40 3011

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

15-03-1999

| Document brevet cité au rapport de recherche | Date de publication | Membre(s) de la famille de brevet(s) | Date de publication |
|---|---|---|---|
| EP 0408429 A | | JP 6070099 B | 07-09-1994 |
| | | PT 95998 A | 13-09-1991 |
| | | US 5591816 A | 07-01-1997 |
| | | US 5668231 A | 16-09-1997 |
| | | US 5294674 A | 15-03-1994 |
| US 5166274 A | 24-11-1992 | AUCUN | |

EPO FORM P0460

Pour tout renseignement concernant cette annexe : voir Journal Officiel de l'Office européen des brevets, No.12/82